# EUROPEAN PATENT SPECIFICATION

(11) **EP 2 106 343 B1**
(45) Date of publication and mention of the grant of the patent: **22.05.2013**
(21) Application number: 08713300.5
(22) Date of filing: 25.01.2008
(51) Int. Cl.: B32B 27/12

(54) **ELASTOMERIC LAMINATE MATERIALS THAT DO NOT REQUIRE MECHANICAL ACTIVATION**
ELASTOMERE LAMINATMATERIALIEN, DIE KEINER MECHANISCHEN AKTIVIERUNG BEDÜRFEN
STRATIFIÉS ÉLASTOMÈRES NE NÉCESSITANT PAS UNE ACTIVATION MÉCANIQUE

(30) Priority: 25.01.2007 US 886567 P
(43) Date of publication of application: 07.10.2009
(73) Proprietor: Clopay Plastic Products Company, Inc., Mason, Ohio 45040-3101 (US)
(72) Inventor: MUSLET, Iyad, Mason, OH 45040 (US); HEGGS, Jacqueline, Cincinnati, OH 45249 (US); BLAND, David, G., Mason, OH 45040 (US); MORRISON, James, Wilder, KY 41076 (US); MAHONEY, William, P., Cincinnati, OH 45239 (US); HERRINGTON, Stephen, L., Hamilton, OH 45013 (US); PITTS, Daniel, E., Germantown, OH 45327 (US); ETTER, Scott, Cincinnati, OH 45240 (US); STEINMETZ, Daniel, Edgewood, KY 41017 (US); BOYD, Gregory, T., Morrow, OH 45412 (US)
(74) Representative: Baker, Karen Veronica
(86) International application number: PCT/US2008/001057
(87) International publication number: WO 2008/121175

(56) References cited:
- US-B1- 6 313 372

## Description

### Field of the Invention

The present invention relates to elastomeric films laminated to nonelastomeric materials, such as fabrics, where the resulting laminates are elastomeric without mechanical activation. The present invention also relates to methods of making laminates of elastomeric films and nonelastomeric materials, where the resulting laminates are elastomeric without mechanical activation.

### Background of the Invention

Elastomeric materials have long been prized for their ability to expand to fit over or around larger objects, and then retract to provide a snug fit around the objects. Elastomeric materials are often used in garments to provide a snug fit, such as in active wear. Elastomers can also form resilient but effective barriers, such as in the cuffs of thermal garments intended to retain body heat.

One example of a type of garment where both fit and barrier properties are important is hygienic products such as diapers. Elastomeric materials are used in the waist, around the leg openings, and in the fasteners (for a diaper) or sides (for an underpants-type garment). The elastomeric materials in these regions improve the overall fit of the garment, and also make it much easier to both don and remove the garment. The elastomeric materials also act as resilient barriers, improving the containment capabilities of the garment while still allowing comfort and free movement to the wearer.

In a hygienic product, the elastomeric material used can be in the form of threads, fabrics, or films. Using elastomeric threads can pose challenges in assembling the garment, since the threads must be applied as one component of many in the manufacturing process. These threads can also be weak and they tend to break, which could lead to the elastic failing even if there are redundant threads present. Elastomeric fabrics are somewhat easier to work with in a manufacturing process, but the fabrics themselves tend to be expensive both in raw materials and in the cost of manufacturing the fabric itself. Elastomeric films are easier to use in manufacturing than threads and are less expensive than elastomeric fabrics to produce. Elastomeric films also tend to be stronger than threads or fabrics, and less likely to fail in use.

However, elastomeric materials may be irritating or damaging if exposed directly to the skin. Many people are allergic to latex or synthetic rubber compounds if these compounds are in contact with the skin. Elastomeric materials that directly touch the skin can also rub, pinch, or 'burn' the skin, creating painful red marks.

To avoid direct contact between the elastomeric materials and the wearer's skin, and also to give the elastomeric material a more pleasant, cloth-like feel and appearance, it is known in the art to cover the elastomeric material with fabric or fabric-like material. For instance, elastomeric films used in limited-use or disposable garments may be bonded or laminated to layers of nonwoven, woven, or knitted fabric, so the fabric covers the elastomer and contacts the wearer's skin. This bonding or lamination of the elastomeric film to fabrics is done by various known means, including extrusion lamination, adhesive lamination, thermal lamination, and ultrasonic lamination. The fabrics used for disposable items are typically nonwoven materials made from inexpensive but non-elastomeric materials such as polypropylene or polyethylene.

However, once typical elastomeric films are bonded to one or more layers of fabric, the resulting laminate is usually no longer elastomeric, unless the fabric itself is also made of elastomeric materials. Nonwoven fabrics made from elastomeric polymers are known, but these materials are typically too expensive for limited-use or disposable articles. If a non-elastomeric fabric is bonded to an elastomeric film, the fabric will bond to the elastomer in such a way as to restrain the elastomer, and the resulting laminate will be no more elastomeric than the fabric component.

Many approaches have been taken to form a laminate of elastomeric film and fabric which remains elastomeric once the laminate layers are bonded together. One approach is to fold, corrugate, crepe, or otherwise gather the fabric layer prior to bonding it to the elastomeric film. The gathered fabric is bonded to the film at specified points or lines, not continually across the surface of the film. While the film is in a relaxed state, the fabric remains corrugated or puckered on the film; once the elastomeric film is stretched, the fabric layer flattens out until the puckered material is essentially flat, at which point the elastomer stretching ceases.

Another approach is to stretch the elastomeric film, then bond the fabric to the film while the film is stretched. Again, the fabric is bonded to the film at specified points or lines rather than continually across the surface of the film. When the stretched film is allowed to relax, the fabric corrugates or puckers over the unstretched elastomeric film.

Another approach is to 'neck' the fabric prior to bonding it to the elastomer. Necking is a process by which the fabric is pulled in one direction, which causes the fibers in the fabric to slide closer together, and the width of the fabric in the direction perpendicular to the pulling direction is reduced. Necking is very effective with knitted and nonwoven fabrics, although it is less effective with woven fabrics. If the necked fabric is point-bonded to an elastomeric film, the resulting laminate will stretch somewhat in a direction perpendicular to the direction in which the fabric was pulled during the necking process, because the fibers of the necked fabric can slide away from one another as the laminate stretches.

Yet another approach is to activate the elastomeric laminate once it has been formed. Activation is a process by which the elastomeric laminate is rendered easy to stretch. Most often, activation is a physical treatment, modification or deformation of the elastomeric laminate, said activation being performed by mechanical means. For example, the elastomeric laminate may be incrementally stretched by using intermeshing rollers, as discussed in U.S. Patent No. 5,422,172, to render the laminate stretchable and recoverable. However, the mechanical activation process can weaken or tear the underlying film, fabric, or the laminate as a whole, which creates a risk of the laminate tearing and failing while the material is in use. Laminates that undergo post-lamination mechanical activation are often made of heavier-gauge materials in order to correct for potential failures due to the laminate being damaged during mechanical activation.

Some of these methods are limited by the need for complicated manufacturing techniques. For instance, corrugating or gathering a fabric layer prior to bonding the fabric to the elastomeric film requires machinery to gather and hold the fabric prior to bonding. In addition, an excess amount of fabric must be used relative to the amount of elastomeric film, since there must be extra fabric to corrugate or pucker over the unstretched film. Stretching the elastomeric film or necking the fabric prior to bonding the stretched or necked layer to the unstretched layer also requires additional machinery to pre-stretch or pre-neck one layer, then hold that layer in a stretched or necked condition. These processes are slow ways to manufacturing elastomeric materials. Mechanically activating an already-formed elastomeric laminate is much faster, but still requires additional capital for mechanical activation machinery to manipulate the laminate in order to activate it.

There remains a need to effectively manufacture a laminate of an elastomeric film and fabric that is stretchable without complicated processing methods or capital-intensive mechanical activation techniques. Such a laminate should be easy, inexpensive, and fast to manufacture, without using excessive amounts of material.

### Summary of the Invention

In one embodiment, the present invention is directed to a laminate of an elastomeric film and one or more layers of fabric, said laminate being stretchable and recoverable without mechanical activation. By controlling the elastomeric film composition, the type of fabric used in the laminate, and the bond strength between the film and fabric layers, an elastomeric laminate that does not require excessive material can be made using high-speed machinery without requiring mechanical activation to make the laminate stretchable. In other embodiments of the present invention, methods of making such elastomeric laminates requiring no mechanical activation are given.

Other embodiments of the invention will be apparent in view of the following detailed description of the invention.

### Brief Description of the Drawings

The invention will be more fully understood in view of the drawings, in which:
Figures 1a-1d illustrate several possible structures for the inventive multilayer elastomeric laminate;
Figure 2 is a schematic of a typical cast extrusion process;
Figure 3 is a schematic of a typical adhesive bonding process; and
Figure 4 is a schematic of a typical extrusion lamination process.

### Detailed Description of the Invention

The inventors have discovered that, by careful selection of the elastomeric film composition, the physical properties of the laminated fabric, and the bonding conditions and bond strength of the resulting elastomeric laminate, stretchable and recoverable laminates of elastomeric film and one or more layers of fabric can be manufactured that do not require that one or more layers of the laminate be gathered or stretched prior to lamination. The elastomeric laminate of the present invention also does not require mechanical activation after it is formed in order to be stretchable and recoverable. The inventive elastomeric laminate and methods of making such elastomeric laminate are disclosed herein.

For the purpose of this disclosure, the following terms are defined:
* "Film" refers to material in a sheet-like form where the dimensions of the material in the x (length) and y (width) directions are substantially larger than the dimension in the z (thickness) direction. Films have a z-direction thickness in the range of about 1 µm to about 1 mm, which corresponds to about 0.9 to 1000 gsm for many elastomeric films.
* "Basis weight" is an industry standard term that quantifies the thickness or unit mass of a film or laminate product. The basis weight is the mass per planar area of the sheet-like material. Basis weight is commonly stated in units of grams per square meter (gsm) or ounces per square yard (osy).
* "Coextensive" refers to two sheet-like material layers that are laid together such that there is substantially continuous surface-to-surface contact between the layers, and neither layer is substantially corrugated, bunched, gathered, shirred, looped, or otherwise configured so that substantial portions of the surface of that layer do not contact the available surface of the other layer.
* "Laminate" as a noun refers to a layered structure of sheet-like materials stacked and bonded so that the layers are substantially coextensive across the width of the narrowest sheet of material. The layers may comprise films, fabrics, or other materials in sheet form, or combinations thereof. For instance, a laminate may be a structure comprising a layer of film and a layer of fabric bonded together across their width such that the two layers remain bonded as a single sheet under normal use. A laminate may also be called a composite or a coated material. "Laminate" as a verb refers to the process by which such a layered structure is formed.
* "Coextrusion" refers to a process of making multilayer polymer films. When a multilayer polymer film is made by a coextrusion process, each polymer or polymer blend comprising a layer of the film is melted by itself. The molten polymers may be layered inside the extrusion die, and the layers of molten polymer films are extruded from the die essentially simultaneously. In coextruded polymer films, the individual layers of the film are bonded together but remain essentially unmixed and distinct as layers within the film. This is contrasted with blended multicomponent films, where the polymer components are mixed to make an essentially homogeneous blend or heterogeneous mixture of polymers that are extruded in a single layer.
* "Extrusion lamination" or "extrusion coating" refer to processes by which a film of molten polymer is extruded onto a solid substrate, in order to coat the substrate with the polymer film and to bond the substrate and film together.
* "Stretchable" and "recoverable" are descriptive terms used to describe the elastomeric properties of a material. "Stretchable" means that the material can be extended by a pulling force to a specified dimension significantly greater than its initial dimension without breaking. For example, a material that is 10 cm long that can be extended to about 13 cm long without breaking under a pulling force could be described as stretchable. "Recoverable" means that a material which is extended by a pulling force to a certain dimension significantly greater than its initial dimension without breaking will return to its initial dimension or a specified dimension that is adequately close to the initial dimension when the pulling force is released. For example, a material that is 10 cm long that can be extended to about 13 cm long without breaking under a pulling force, and which returns to about 10 cm long or to a specified length that is adequately close to 10 cm could be described as recoverable.

* "Elastomeric" or "elastomer" or "elastic" refer to polymer materials which can be stretched to at least about 150% of their original dimension without breaking, and which then recover to no more than 120% of their original dimension, in the direction of the applied stretching force. For example, an elastomeric film that is 10 cm long should stretch to at least about 15 cm under a stretching force, and then retract to no more than about 12 cm when the stretching force is removed. Elastomeric materials are both stretchable and recoverable.
* "Extensible" refers to polymer materials that can be stretched at least about 130% of their original dimension without breaking, but which either do not recover significantly or recover to greater than about 120% of their original dimension and therefore are not elastomeric as defined above. For example, an extensible film that is 10 cm long should stretch to at least about 13 cm under a stretching force, then either remain about 13 cm long or recover to a length more than about 12 cm when the stretching force is removed. Extensible materials are stretchable, but not recoverable.
* "Activation" or "activating" refers to a process by which the elastomeric film or material is rendered easy to stretch. Most often, activation is a physical treatment, modification or deformation of the elastomeric material. Stretching a film for the first time is one means of activating the film. An elastomeric material that has undergone activation is called "activated." A common example of activation is blowing up a balloon. The first time the balloon is inflated (or "activated"), the material in the balloon is stretched. If the inflated balloon is allowed to deflate and then blown up again, the "activated" balloon is much easier to inflate.
* "Mechanical activation" refers to activation process performed using machinery to apply a physical treatment, modification or deformation of the elastomeric material. Mechanical activation is distinguished from activation by a consumer or end user, for example, the consumer or end user stretching the elastomeric material by hand.
* "Film strength" or "mechanical strength" are the tensile properties of a film, as measured by a method such as ASTM D-822 "Tensile Properties of Thin Plastic Sheeting." Unless noted otherwise, "film strength" or "mechanical strength" refers specifically to tensile at break and % elongation at break.
* "Tear strength" is a property of a film which determines the ease or difficulty by which the film can be torn starting from a notch or aperture cut into the film, as measured by a method such as the notched Elmendorf test, ASTM D-1922.
* "Bond strength" is a property of a laminate comprising two or more layers. The bond strength is determined by measuring the force required to peel apart the laminate layers after they are bonded together. Bond strength can be measured by methods such as ASTM D-1876 or ASTM F-904.

In one embodiment, the present invention is directed to an elastomeric laminate in accordance with claim 1.

The elastomeric polymers used in the polymer film layer of the elastomeric laminates and methods of this invention may comprise any extrudable elastomeric polymer resin. Examples of such elastomeric polymer resins include block copolymers of vinyl arylene and conjugated diene monomers, natural rubbers, polyurethane rubbers, polyester rubbers, elastomeric polyolefins and polyolefin blends, elastomeric polyamides, or the like. The elastomeric film may also comprise a blend of two or more elastomeric polymers of the types previously described. For instance, one useful group of elastomeric polymers are the block copolymers of vinyl arylene and conjugated diene monomers, such as AB, ABA, ABC, or ABCA block copolymers where the A segments comprise arylenes such as polystyrene and the B and C segments comprise dienes such as butadiene, isoprene, or ethylene butadiene. Suitable block copolymer resins are readily available from KRATON® Polymers of Houston, Texas or Dexco™ Polymers LP of Planquemine, Louisiana. Another useful group of etastomeric polymers are polyolefinic elastomers (POEs) which are elastomeric copolymers of polyethylene or polypropylene. Suitable POEs are available from The Dow Chemical Company of Midland, Michigan or ExxonMobil Chemical Company of Houston, Texas.

The elastomeric film layers of the present invention comprise at least 50% of one or more elastomeric resins in the film composition. The use of POEs is particularly preferred, because the elastomeric film will have a greater affinity for a polyolefinic fabric in the laminate. The elastomeric film of the present invention may comprise other components to modify the film properties, aid in the processing of the film, or modify the appearance of the film. For example, polymers such as polystyrene homopolymer or high-impact polystyrene may be blended with the elastomeric polymer in the film in order to stiffen the film and improve the strength properties. Low-molecular-weight polyolefins or mineral oil may be added to the elastomeric film to reduce the elastic modulus and improve the stretchability of the film. Viscosity-reducing polymers and plasticizers may be added as processing aids. Other additives such as pigments, dyes, antioxidants, antistatic agents, slip agents, foaming agents, heat and/or light stabilizers, and inorganic and/or organic fillers may be added.

The basis weight of the elastomeric film in the nonactivated elastomeric laminate must be controlled. It has been found that the elastomeric film should have a basis weight no more than 70 gsm, more preferably less than about 50 gsm, more preferably less than about 30 gsm. A lower basis-weight film allows the extruded polymer film to cool and solidify more rapidly, which gives the manufacturer more control over the strength of the bond between the elastomeric film and the fabric layers in the laminate. A lower basis-weight film also has the distinct advantage of being less expensive to manufacture. Because the inventive laminate is not activated after lamination, however, the resulting nonactivated elastomeric laminate is as strong and resists tearing as well as heavier elastomeric laminates that require mechanical activation.

The nonactivated elastomeric laminate also includes a substrata layer comprising an extensible, non-woven fabric which stretches to at least 130% of its original dimension without breaking but which recovers to greater than 120% of its original dimension. The substrate layer must comprise extensible materials, such that the substrate layer has a tensile strain at break that is greater than 100% and a tensile stress at break no greater than 4 N/inch (1.6N/cm).

Examples of suitable nonwoven fabrics include spunbond, carded, meltblown, and spunlaced nonwoven webs. For the present invention, carded nonwovens are particularly preferred. These fabrics may comprise fibers of polyolefins such as polypropylene or polyethylene, polyesters, polyamides, polyurethanes, elastomers, rayon, cellulose, copolymers thereof, or blends thereof or mixtures thereof. The nonwoven fabrics may also comprise fibers that are homogenous structures or comprise bicomponent structures such as sheath/core, side-by-side, islands-in-the-sea, and other known bicomponent configurations. For a detailed description of nonwovens, see "Nonwoven Fabric Primer and Reference Sampler" by E. A. Vaughn, Association of the Nonwoven Fabrics Industry, 3d Edition (1992). Such nonwoven fabrics typically have a weight of about 5 grams per square meter (gsm) to 75 gsm. In a preferred embodiment, the nonwoven fabric should have a basis weight of about 5 to 30 gsm.

The inventive nonactivated elastomeric laminate may also comprise two or more such substrate layers, as described above.

Controlling the bond strength between the elastomeric film and the fabric layers of the nonactivated elastomeric laminate is an important aspect of the present invention. Bond strength is typically measured by a method such as ASTM D-1876. The inventors have discovered that the bond between the elastomeric film layer and the substrate layer of the elastomeric laminate should be no greater than 50 N/in(20N/cm) to achieve the inventive nonactivated elastomeric laminate. In another embodiment, the bond between the elastomeric film layer and the fabric layer should be no more than about 40 N/in. In yet another embodiment, the bond between the elastomeric film layer and the fabric layer should be not more than about 25 N/in. Bond strength between the layers can be achieved by a number of ways, depending on the lamination method. If the layers are laminated by an adhesive method, the choice of adhesive and the amount nf adhesive applied to bond the layers can be adjusted to achieve the desired bond strength. If the layers are laminated by an extrusion lamination process, the temperature of the extruded molten elastomeric web can be controlled to optimize the bond strength. The temperature of the extruded molten web can be controlled by a cooling device such as the device described in U.S. Patent No. 6,740,184 and No. 6,951,591.

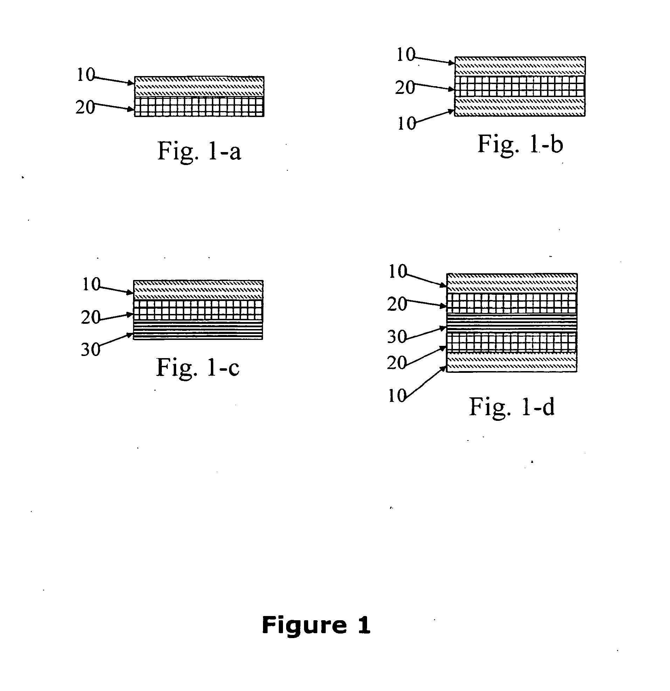

**Fig. 1** shows several possible embodiments of the elastomeric laminates of the present invention. In each subfigure of **Fig. 1****,** the laminate components are as follows: **10** represents an A layer, which may be a substrate layer, such as a fabric layer; **20** represents a B layer, which may be an elastomeric polymeric film layer; and **30** represents a C layer, which may be a another elastomeric polymeric film layer if the elastomeric film in the laminate is a multilayer film. In an alternative embodiment, the C layer may be another substrate layer, such as another fabric. Hence, Fig. **1-a** represents an AB laminate structure, Fig. **1-b** represents an ABA laminate structure, Fig. **1-c** represents an ABC laminate structure and Fig. **1-d** represents an ABCBA laminate structure. Additional embodiments and combinations of laminate layers will be understood by one skilled in the art as within the scope of the present invention.

Any film-forming process can prepare the elastomeric film of the present invention. Known film-forming processes include cast extrusion and blown-film extrusion. In a specific embodiment, a coextrusion process, such as cast coextrusion or blown-film coextrusion, is used to form the elastomeric film. Coextrusion of multilayer films by cast or blown processes are well known.

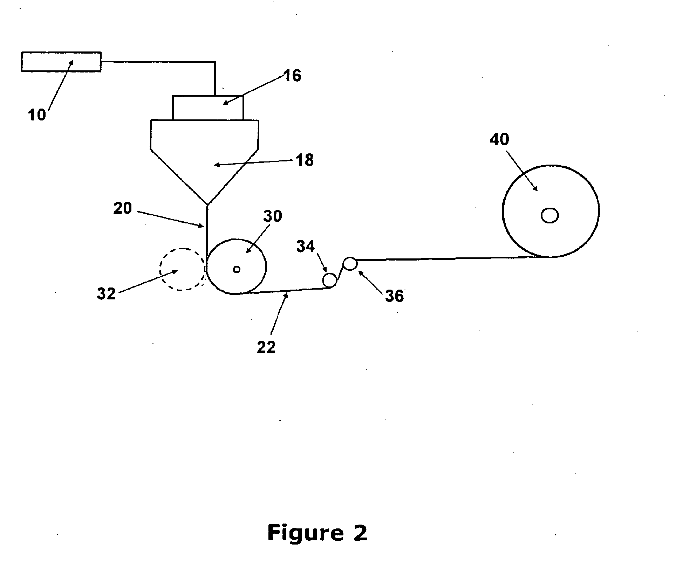

Figure **2** illustrates a schematic for a typical cast extrusion process. An elastomeric polymer composition is melted in a conventional screw extruder **10.** The molten polymer composition is then transferred from the extruder to the feed block **16** and the molten polymer is then extruded from the extrusion die **18** to form a molten polymer web **20.** The molten polymer web **20** is cast onto a chill roll **30** where the web is rapidly cooled to form the film **22.** The chill roll **30** may be a smooth roll that makes a smooth film, or an embossing roll which embosses a pattern onto the surface of the film. An optional backing roll 32 can assist the chill roll 30 in forming the film **22.** The film 22 may then pass over optional equipment such as idler rolls 34 and 36, that facilitate the transfer of the film from the cast extrusion section to winder 40 where it is wound and stored to await further processing.

The elastomeric film layer is coextensively bonded across its first surface to a surface of the substrate layer so that the first surface and surface of substrate are substantially continuously bonded together there across.

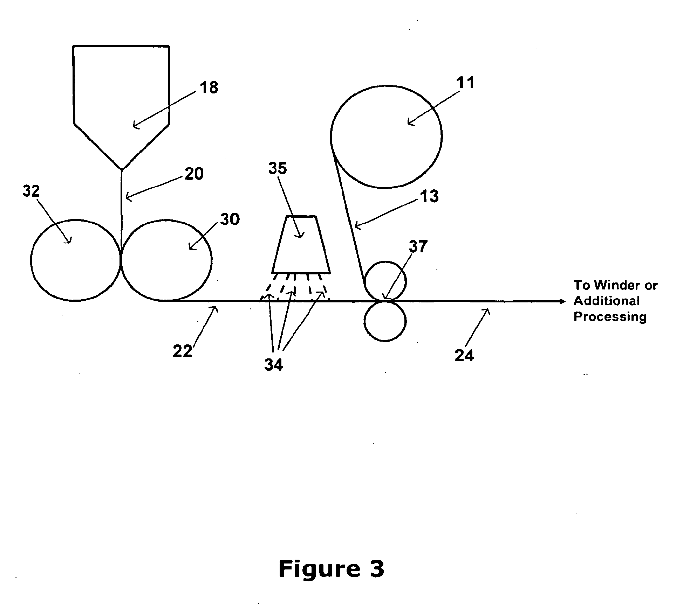

One method of forming the inventive elastomeric laminate is adhesive bonding, illustrated in Fig. **3****.** The elastomeric polymeric film layer **20** is melt-extruded from a film-forming die **18** and drops to the nip between the illustrated metal roll **30** and backing roll **32.** The metal roll **30** may be chilled to rapidly cool the molten polymer film. The metal roll may also be engraved with an embossing pattern if such a pattern is desired on the resulting film. After the extruded film layer **22** has cooled and solidified, it passes to an adhesive bonding station, where adhesive **34** is applied by means such as a spray unit **35** onto the film. Alternatively, the spray unit **35** may spray adhesive onto the incoming fabric layer **13.** The fabric layer **13** is unwound from roll **11** and introduced into a nip 37 that presses the elastomeric film layer **22** and the fabric layer **13** to bond the layers. The elastomeric laminate **24** may now be wound into a roll or go on for further processing.

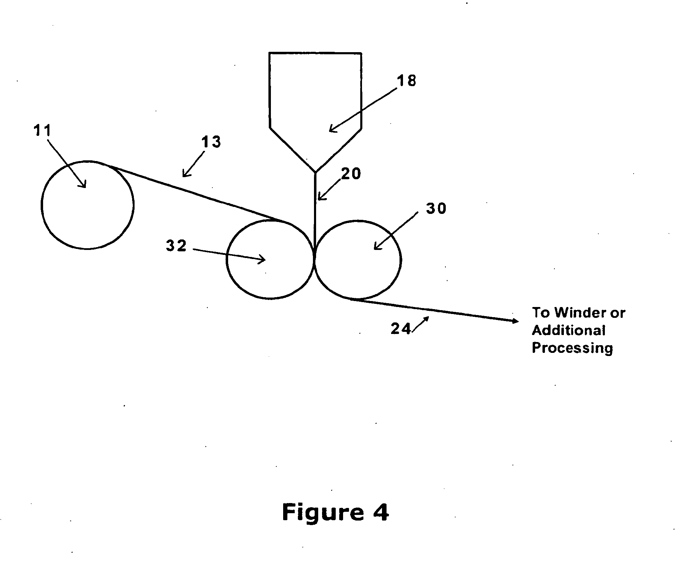

In another embodiment, an extrusion lamination process is used to form the nonactivated elastomeric laminate. Such extrusion lamination processes are well known. Fig. **4** illustrates a typical extrusion lamination process. A polymeric film layer **20** is melt-extruded through a film-forming die **18** and drops to the nip between the illustrated metal roll **30** and backing roll **32.** The metal roll may be chilled to rapidly cool the molten polymer film. The metal roll **30** may also be engraved with an embossing pattern if such a pattern is desired on the resulting film. The fabric layer **13** is unwound from roll **11** and introduced into the nip between the metal and backing rolls as well. The extruded film layer **20** and fabric layer **13** are pressed together at the nip to bond the layers. The elastomeric laminate **24** may now be wound into a roll or go on for further processing.

It is to be understood that additional processing steps such as aperturing the elastomeric laminate, printing the laminate, slitting the laminate, laminating additional layers to the laminate, and other such processes may be added to the inventive process and are within the scope of this invention.

The following example is presented to illustrate one embodiment of the present invention. This example is not intended to limit the invention in any way.

### Example 1

An elastomeric laminate of the present invention was prepared by extrusion laminating an elastomeric film layer between two nonwoven fabric layers. The elastomeric film comprised about 95% VISTAMAXX® polyolefinic elastomer from ExxonMobil Chemical Company, about 4% white masterbatch compound from Shulman Company, and about 1% process aid from Lehmann & Voss. The elastomeric film was extruded to form a film basis weight of about 40 gsm. The nonwoven fabric layers comprised carded polypropylene nonwoven at a basis weight of 24 gsm per layer. This nonwoven fabric had an internal bond of about 3.6 N/in. The extrusion laminated elastomeric laminate was not mechanically activated in any way. No pinholes or tears were observed in the resulting laminate. This laminate could easily be manually stretched to about 150% or more of its original width by adults of normal strength, and the laminate did not develop pinholes, tears, or other damage after being repeated stretched by hand.

## Claims

1. An elastomeric laminate, comprising:
a) an elastomeric film layer with a first surface and a second surface, wherein:
i) the film comprises one or more elastomeric polymers, such that the total amount of elastomeric polymers comprises at least 50% of the elastomeric film composition; and
ii) the basis weight of the elastomeric film is no more than 70 gsm; and
b) a substrate layer, comprising an extensible, non-woven fabric, which stretches to at least 130% of its original dimension without breaking but which recovers to greater than 120% of its original dimension, wherein:
i) the substrate layer has a tensile strain at break that is greater than 100%; and
ii) the substrate layer has a tensile stress at break that is no greater than 4 N/in (1.6 N/cm);
wherein the elastomeric film layer is coextensively bonded across its first surface to a surface of the substrate layer so that the first surface and surface of the substrate are substantially continuously bonded together thereacross,
wherein the bond strength between the elastomeric film layer and the substrate layer is no greater than 50 N/in (20 N/cm), and
wherein the elastomeric laminate is stretchable and recoverable without post-lamination mechanical activation.

2. An elastomeric laminate according to claim 1, wherein the elastomeric film layer comprises one or more layers of elastomeric polymers selected from the group consisting of block copolymers of vinyl arylene and conjugated diene monomers. styrenic block copolymers, natural rubbers, polyurethane rubbers, polyester rubbers, polyolefinic rubbers, polyolefinic blends, elastomeric polyamides, polyolefinic elastomers, and combinations thereof.

3. An elastomeric laminate according to claim 1, wherein the elastomeric film layer is a multilayer film.

4. An elastomeric laminate according to claim 1, wherein the elastomeric film layer has a basis weight of less than 30 gsm.

5. An elastomeric laminate according to claim 1, wherein a third sheet-like substrate is bonded coextensively across the second surface of the elastomeric film layer wherein the third sheet-like substrate is selected from the group consisting of a woven fabric, knit fabric, scrim, netting, woven tape material, cross-laminated open mesh, flash-spun material, and nonwoven fabric, and combinations thereof.

6. An elastomeric laminate according to claim 1, wherein the bond strength between the elastomeric film layer and the substrate layer is no greater than 25 N/in (10 N/cm).

7. An elastomeric laminate according to claim 1, wherein the elastomeric film layer is coextensively bonded across its first surface to a surface of the substrate layer via extrusion lamination or extrusion coating so that the first surface and surface of the substrate are substantially continuously bonded together thereacross.

8. A method of forming an elastomeric laminate, comprising:
a) providing an elastomeric film layer with a first surface and a second surface, wherein:
i) the film comprises one or more elastomeric polymers, such that the total amount of elastomeric polymers comprises at least 50% of the elastomeric film composition; and
ii) the basis weight of the elastomeric film is no more than 70 gsm;
b) providing a substrate layer, comprising an extensible , non-woven fabric, which stretches to at least 130% of its original dimension without breaking but which recovers to greater than 120% of its original dimension, wherein:
i) the substrate layer has a tensile strain at break that is greater than 100%; and
ii) the substrate layer has a tensile stress at break that is no greater than 4 N/in (1.6 N/cm), and
c) coextensively bonding the elastomeric film layer across its first surface to a surface of the substrate layer so that the first surface and surface of the substrate are substantially continuously bonded together thereacross, wherein the bond strength between the elastomeric film layer and the substrate layer is no greater than 50 N/in (20 N/cm), and
wherein the elastomeric laminate is stretchable and recoverable without post-lamination mechanical activation.

9. A method according to claim 8, wherein the elastomeric film layer comprises one or more layers of elastomeric polymers selected from the group consisting of block copolymers of vinyl arylene and conjugated diene monomers, styrenic block copolymers, natural rubbers, polyurethane rubbers, polyester rubbers, polyolefinic rubbers, polyolefinic blends, elastomeric polyamides, polyolefinic elastomers, and combinations thereof.

10. A method according to claim 8, wherein the elastomeric film layer has a basis weight of less than 30 gsm.

11. A method according to claim 8, wherein a third sheet-like substrate is bonded coextensively across the second surface of the elastomeric film layer wherein said third sheet-like substrate is selected from the group consisting of non-woven fabric, woven fabric, knit fabric, scrim, netting, woven tape material, cross-laminated open mesh, flash-spun material, and combinations thereof.

12. A method according to claim 8, wherein the bond strength between the elastomeric film layer and the substrate layer is no greater than 25 N/in (10 N/cm).

13. A method according to claim 8, wherein coextensively bonding comprises, via extrusion lamination or extrusion coating, coextensively bonding the elastomeric film layer across its first surface to a surface of the substrate layer so that the first surface and surface of the substrate are substantially continuously bonded together thereacross.

## Patentansprüche

1. Elastomeres Laminat, das Folgendes umfasst:
a) eine elastomere Folienschicht mit einer ersten Oberfläche und einer zweiten Oberfläche, wobei:
i) die Folie ein oder mehrere elastomere Polymere umfasst, so dass: die Gesamtmenge an elastomeren Polymeren wenigstens 50 % der elastomeren Folienzusammensetzung ausmacht; und
ii) das Basisgewicht der elastomeren Folie nicht mehr als 70 g/m² beträgt; und
b) eine Substratschicht, die einen streckbaren Vliesstoff umfasst, der sich auf wenigstens 130 % seines ursprünglichen Maßes dehnt, ohne zu zerreißen, aber auf mehr als 120 % seines ursprünglichen Maßes zurückkehrt, wobei:
i) die Substratschicht eine Bruchdehnung von mehr als 100 % hat; und
ii) die Substratschicht eine Bruchspannung von nicht mehr als 4 N/Zoll (1,6 N/cm) hat;
wobei die elastomere Folienschicht über ihre erste Oberfläche koextensiv an eine Oberfläche der Substratschicht gebunden ist, so dass die erste Oberfläche und die Oberfläche des Substrats im Wesentlichen durchgehend darüber aneinander gebunden sind,
wobei die Bindungsstärke zwischen der elastomeren Folienschicht und der Substratschicht nicht größer als 50 N/Zoll (20 N/cm) ist, und
wobei das elastomere Laminat dehnbar und wiederherstellbar ist, ohne mechanische Aktivierung nach der Laminierung.

2. Elastomeres Laminat nach Anspruch 1, wobei die elastomere Folienschicht eine oder mehrere Schichten aus elastomeren Polymeren umfasst, die ausgewählt sind aus der Gruppe bestehend aus Blockcopolymeren von Vinylarylen und konjugierten Dienmonomeren, Styrolblockcopolymeren, natürlichen Kautschuken, Polyurethankautschuken, Polyesterkautschuken, Polyolefinkautschuken, Polyolefinmischungen, elastomeren Polyamiden, Polyolefinelastomeren und Kombinationen davon.

3. Elastomeres Laminat nach Anspruch 1, wobei die elastomere Folienschicht eine Mehrschichtfolie ist.

4. Elastomeres Laminat nach Anspruch 1, wobei die elastomere Folienschicht ein Basisgewicht von weniger als 30 g/m² hat.

5. Elastomeres Laminat nach Anspruch 1, wobei ein drittes plattenartiges Substrat koextensiv über die zweite Oberfläche der elastomeren Folienschicht gebunden ist, wobei das dritte plattenartige Substrat ausgewählt ist aus der Gruppe bestehend aus einem Webstoff, Strickstoff, Mull, Geflecht, gewebtem Bandmaterial, einer kreuzlaminierten offenen Netzstruktur, Flash-gesponnenem Material und Vliesstoff und Kombinationen davon.

6. Elastomeres Laminat nach Anspruch 1, wobei die Bindungsstärke zwischen der elastomeren Folienschicht und der Substratschicht nicht größer als 25 N/Zoll (10 N/cm) ist.

7. Elastomeres Laminat nach Anspruch 1, wobei die elastomere Folienschicht per Extrusionslaminierung oder Extrusionsbeschichtung koextensiv über ihre erste Oberfläche an eine Oberfläche der Substratschicht gebunden ist, so dass die erste Oberfläche und die Oberfläche des Substrats im Wesentlichen durchgehend darüber aneinander gebunden sind.

8. Verfahren zum Formen eines elastomeren Laminats, das Folgendes beinhaltet:
a) Bereitstellen einer elastomeren Folienschicht mit einer ersten Oberfläche und einer zweiten Oberfläche, wobei:
i) die Folie ein oder mehrere elastomere Polymere umfasst, so dass die Gesamtmenge an elastomeren Polymeren wenigstens 50 % der elastomeren Folienzusammensetzung ausmacht; und
ii) das Basisgewicht der elastomeren Folie nicht mehr als 70 g/m² beträgt;
b) Bereitstellen einer Substratschicht, die einen streckbaren Vliesstoff umfasst, der sich auf wenigstens 130 % seines ursprünglichen Maßes dehnt, ohne zu zerreißen, aber auf mehr als 120 % seines ursprünglichen Maßes zurückkehrt, wobei:
i) die Substratschicht eine Bruchdehnung von mehr als 100 % hat; und
ii) die Substratschicht eine Bruchspannung von nicht mehr als 4 N/Zoll (1,6 N/cm) hat;
c) koextensives Binden der elastomeren Folienschicht über ihre erste Oberfläche an eine Oberfläche der Substratschicht, so dass die erste Oberfläche und die Oberfläche des Substrats im Wesentlichen durchgehend darüber aneinander gebunden sind,
wobei die Bindungsstärke zwischen der elastomeren Folienschicht und der Substratschicht nicht größer als 50 N/Zoll (20 N/cm) ist, und
wobei das elastomere Laminat dehnbar und wiederherstellbar ist, ohne mechanische Aktivierung nach der Laminierung.

9. Verfahren nach Anspruch 8, wobei die elastomere Folienschicht eine oder mehrere Schichten aus elastomeren Polymeren umfasst, die ausgewählt sind aus der Gruppe bestehend aus Blockcopolymeren von Vinylarylen und konjugierten Dienmonomeren, Styrolblockcopolymeren, natürlichen Kautschuken, Polyurethankautschuken, Polyesterkautschuken, Polyolefinkautschuken, Polyolefinmischungen, elastomeren Polyamiden, Polyolefinelastomeren und Kombinationen davon.

10. Verfahren nach Anspruch 8, wobei die elastomere Folienschicht ein Basisgewicht von weniger als 30 g/m² hat.

11. Verfahren nach Anspruch 8, wobei ein drittes plattenartiges Substrat koextensiv über die zweite Oberfläche der elastomeren Folienschicht gebunden ist, wobei das dritte plattenartige Substrat ausgewählt ist aus der Gruppe bestehend aus einem Vliesstoff, Webstoff, Strickstoff, Mull, Geflecht, gewebtem Bandmaterial, einer kreuzlaminierten offenen Netzstruktur, Flash-gesponnenem Material und Kombinationen davon.

12. Verfahren nach Anspruch 8, wobei die Bindungsstärke zwischen der elastomeren Folienschicht und der Substratschicht nicht größer als 25 N/Zoll (10 N/cm) ist.

13. Verfahren nach Anspruch 8, wobei das koextensive Binden das koextensive Binden der elastomeren Folienschicht per Extrusionslaminierung oder Extrusionsbeschichtung über ihre erste Oberfläche an eine Oberfläche der Substratschicht beinhaltet, so dass die erste Oberfläche und die Oberfläche des Substrats im Wesentlichen durchgehend darüber aneinander gebunden werden.

## Revendications

1. Stratifié élastomère, comprenant :
a) une couche de film élastomère comportant une première surface et une deuxième surface,
i) le film comprenant un ou plusieurs polymères élastomères, de telle sorte que la quantité totale de polymères élastomères constitue au moins 50 % de la composition du film élastomère ; et
ii) le grammage du film élastomère n'étant pas supérieur à 70 g/m² ; et
b) une couche de substrat, comprenant un tissu extensible, non tissé, qui s'allonge jusqu'à au moins 130 % de sa dimension originale sans se déchirer, tout en présentant une reprise supérieure à 120 % de sa dimension originale,
i) la couche de substrat ayant une déformation en traction à la rupture qui est supérieure à 100 % ; et
ii) la couche de substrat ayant une contrainte de traction à la rupture qui n'est pas supérieure à 4 N/pouce (1,6 N/cm) ;
la couche de film élastomère étant liée sur l'ensemble de sa première surface à une surface de la couche de substrat en coïncidant avec celle-ci de telle sorte que la première surface et la surface du substrat soient liées de façon sensiblement continue l'une à l'autre sur l'ensemble de ladite première surface,
la force d'adhérence entre la couche de film élastomère et la couche de substrat n'étant pas supérieure à 50 N/pouce (20 N/cm), et
le stratifié élastomère étant étirable et capable de présenter une reprise sans nécessiter d'activation mécanique post-stratification.

2. Stratifié élastomère selon la revendication 1, dans lequel la couche de film élastomère comprend une ou plusieurs couches de polymères élastomères sélectionnés dans le groupe constitué de copolymères à blocs de vinylarylène et de monomères diènes conjugués, de copolymères à blocs styréniques, de caoutchoucs naturels, de caoutchoucs polyuréthanes, de caoutchoucs polyesters, de caoutchoucs polyoléfiniques, de mélanges polyoléfiniques, de polyamides élastomères, d'élastomères polyoléfiniques, et de combinaisons de ceux-ci.

3. Stratifié élastomère selon la revendication 1, dans lequel la couche de film élastomère est un film multicouche.

4. Stratifié élastomère selon la revendication 1, dans lequel la couche de film élastomère a un grammage inférieur à 30 g/m².

5. Stratifié élastomère selon la revendication 1, dans lequel un troisième substrat semblable à une feuille est lié à l'ensemble de la deuxième surface de la couche de film élastomère en coïncidant avec celle-ci, le troisième substrat semblable à une feuille étant sélectionné dans le groupe constitué d'un tissu tissé, d'un tissu tricoté, d'un canevas, d'un filet, d'un matériau sous forme de bande tissée, d'une maille ouverte à stratification croisée, d'un tissu flashspun, d'un tissu non tissé, et de combinaisons de ceux-ci.

6. Stratifié élastomère selon la revendication 1, dans lequel la force d'adhérence entre la couche de film élastomère et la couche de substrat n'est pas supérieure à 25 N/pouce (10 N/cm).

7. Stratifié élastomère selon la revendication 1, dans lequel la couche de film élastomère est liée sur l'ensemble de sa première surface à une surface de la couche de substrat en coïncidant avec celle-ci, par un procédé de stratification par extrusion ou de revêtement par extrusion, de telle sorte que la première surface et la surface du substrat soient liées de façon sensiblement continue l'une à l'autre sur l'ensemble de ladite première surface.

8. Procédé de formation d'un stratifié élastomère, consistant à :
a) fournir une couche de film élastomère comportant une première surface et une deuxième surface,
i) le film comprenant un ou plusieurs polymères élastomères, de telle sorte que la quantité totale de polymères élastomères constitue au moins 50 % de la composition du film élastomère ; et
ii) le grammage du film élastomère n'étant pas supérieur à 70 g/m² ;
b) fournir une couche de substrat, comprenant un tissu extensible, non tissé, qui s'allonge jusqu'à au moins 130 % de sa dimension originale sans se déchirer, tout en présentant une reprise supérieure à 120 % de sa dimension originale,
i) la couche de substrat ayant une déformation en traction à la rupture qui est supérieure à 100 % ; et
ii) la couche de substrat ayant une contrainte de traction à la rupture qui n'est pas supérieure à 4 N/pouce (1,6 N/cm), et
c) lier la couche de film élastomère sur l'ensemble de sa première surface à une surface de la couche de substrat en la faisant coïncider avec celle-ci de telle sorte que la première surface et la surface du substrat soient liées de façon sensiblement continue l'une à l'autre sur l'ensemble de ladite première surface, la force d'adhérence entre la couche de film élastomère et la couche de substrat n'étant pas supérieure à 50 N/pouce (20 N/cm), et
le stratifié élastomère étant étirable et capable de présenter une reprise sans nécessiter d'activation mécanique post-stratification.

9. Procédé selon la revendication 8, dans lequel la couche de film élastomère comprend une ou plusieurs couches de polymères élastomères sélectionnés dans le groupe constitué de copolymères à blocs de vinylarylène et de monomères diènes conjugués, de copolymères à blocs styréniques, de caoutchoucs naturels, de caoutchoucs polyuréthanes, de caoutchoucs polyesters, de caoutchoucs polyoléfiniques, de mélanges polyoléfiniques, de polyamides élastomères, d'élastomères polyoléfiniques, et de combinaisons de ceux-ci.

10. Procédé selon la revendication 8, dans lequel la couche de film élastomère a un grammage inférieur à 30 g/m².

11. Procédé selon la revendication 8, dans lequel un troisième substrat semblable à une feuille est lié à l'ensemble de la deuxième surface de la couche de film élastomère en coïncidant avec celle-ci, ledit troisième substrat semblable à une feuille étant sélectionné dans le groupe constitué d'un tissu non tissé, d'un tissu tissé, d'un tissu tricoté, d'un canevas, d'un filet, d'un matériau sous forme de bande tissée, d'une maille ouverte à stratification croisée, d'un tissu flashspun, et de combinaisons de ceux-ci.

12. Procédé selon la revendication 8, dans lequel la force d'adhérence entre la couche de film élastomère et la couche de substrat n'est pas supérieure à 25 N/pouce (10 N/cm).

13. Procédé selon la revendication 8, dans lequel la liaison coïncidente consiste à utiliser un procédé de stratification par extrusion ou de revêtement par extrusion pour lier la couche de film élastomère sur l'ensemble de sa première surface à une surface de la couche de substrat en la faisant coïncider avec celle-ci, de telle sorte que la première surface et la surface du substrat soient liées de façon sensiblement continue l'une à l'autre sur l'ensemble de ladite première surface.
